# EUROPEAN PATENT SPECIFICATION

(11) **EP 2 329 939 B1**
(45) Date of publication and mention of the grant of the patent: **20.03.2013**
(21) Application number: 10166128.8
(22) Date of filing: 16.06.2010
(51) Int. Cl.: B29C 70/24, B29C 70/08, B29C 70/86, F16B 5/00

(54) **Sandwich panel and method for its manufacture**
Sandwichplatte und Verfahren zu deren Herstellung
Panneau sandwich et procédé de fabrication

(30) Priority: 07.12.2009 BE 200900754
(43) Date of publication of application: 08.06.2011
(73) Proprietor: Groep Stevens International, 9160 Lokeren (BE)
(72) Inventor: Verhaeghe, Jan, 9120 Beveren (BE)
(74) Representative: Luys, Marie-José A.H.

(56) References cited:
- WO-A1-03/011577
- US-B1- 6 187 411

## Description

### Field of the invention.

The invention relates to a sandwich panel comprising a core of foamed synthetic material with a first and second opposite surface, where the first surface is provided with at least one sheet of a fibrous reinforcing material, wherein the second surface is provided with at least a second sheet of fibrous reinforcing material, according to the preamble of the first claim.

The invention relates to a process for producing such a sandwich panel and to a set of a first and second sandwich panel which are connect to each other.

### Background of the invention.

W003097335 discloses a sandwich panel comprising a core of foamed synthetic material, wherein the upper and lower side are covered with an upper and lower sheet of fibrous reinforcing material, respectively. The upper and lower sheet and the core are connected to each other by means of continuous fibers, which extend in the height direction of the panel and which are connected to each other on the upper and lower surface of the panel in the displacement direction of the panel through the tuft-machine. The panel is impregnated with a resin. In production of the sandwich panel, a panel of foamed synthetic material is supplied and on the upper and lower surface of the foamed synthetic material at least one sheet of fibrous reinforcing material is applied. The layers are connected to each other by means of continuous fibers which extend in the height direction of the panel. The continuous fibers are applied up to a distance of the edge of the panel, which extend in the displacement direction of the panel. After applying the continuous fibers, the panel is impregnated with a curable resin and the resin is cured.

This sandwich panel, however, presents the disadvantage that the sheets of fibrous reinforcing material and especially the edges thereof, can shift locally, fold or coil during the production process, both at the level of the upper and lower side of the structure as well as at the level of the upright edges. This precludes the reproducibility of the process and delivers sandwich panels with locally varying mechanical properties and thickness. There is a risk that during impregnation of the sandwich structure with resin, the resin runs out of the structure, foams and locally accumulates on the sides and/or the upper and lower surface of the panel, with jamming of the machine and production errors as a result.

US-A-6187411 discloses the features of the respective preambles of claims 1 and 8.

### Object of the invention.

It is the object of the present invention to provide a panel and a process for producing said panel, with a reduced risk for production errors to occur.

This is achieved according to the invention with the technical features of the characterizing part of the first claim.

Thereto, the sandwich panel and its method for producing of the present invention is defined in claims 1 and 8.

Because of the connection along the edge shifting or moving the sheets with respect to each other and the core is thwarted throughout the sandwich structure. The inventors have found that especially when pultrusion is used as a technique for the impregnation of the sandwich structure with resin, there is a risk of local shifting, moving or deforming parts of the sheets of fibrous reinforcing material, especially along the edges of the sandwich structure as a result. A displacement or deformation of the sheets fibrous reinforcing material along the edges often extends into the inner regions of the sandwich structure, with production errors, not only along the border but also in the more centrally located parts of the sandwich panel. This is undesirable and can be avoided with this invention. In order to provide a sandwich panel with optimum mechanical properties such as compressive strength, bending strength and shear it is important that the sheets fibrous reinforcing material are correctly positioned and present no undesirable deformation neither along the upper and lower surface nor along the edges, before the sandwich structure is impregnated with resin.

Especially near the edges of the fibrous reinforcing material and upright sides of the core there is a risk that the fibrous reinforcing material shifts, fold, rolls, etc. by which local material thickening can occur and the core locally cannot be covered with fiber-like reinforcing material. The connection thwarts such distortion and allows for unambiguous determination of overlapping edge as part of the sandwich structure which form a single piece with the sandwich structure. It is also possible to connect a function to the edge.

As the sheets of fibrous reinforcing material extend beyond the upright sides of the core, the risk of damaging the sheets of fibrous reinforcing material and the core along the edges is minimized, in the course of applying the connection fibers and further processing of the sandwich panel to a functional part. The connection achieves for example, that the risk decreases that bent or rolled ends of the slab in the upright side of the foam core are squeezed with constriction at the upright side as a result.

In the sandwich panel of the present invention it is made possible that the fibrous reinforcing material not only extends along an upper and a lower surface of the panel, but also along at least two opposite upright sides. This improves the uniformity of the mechanical strength and mechanical properties of the panel.

The presence of the overlap part also enables the application at the location of the core material, of connecting fibers over the entire distance between two overlapping edges of the core, thus from edge to edge. Thus the same strength is ensured along the edges and in the middle of the panel. In the state of the art-known panel on the other hand there was a risk of erosion along the edges of the core and loss of cohesion of the fibrous reinforcing material while applying connecting fibers along the edges.

The fibrous reinforcing material thus connected in an overlap part, provides a space which defines the limits within which resin can flow during the impregnation of the sandwich structure with resin, before the resin is cured. This will reduce the risk that the resin flows out of the sandwich structure to a surface of the sandwich panels and foams. Thus, the risk of the occurrence of production errors and jamming of the production machine is minimized.

A preferred embodiment of the sandwich panel of this invention is characterized in that the first part of the first sheet and the second part of the second sheet in at least a part of the overlap part connected by means of continuous connecting fibers of fibrous reinforcing material.

Thus it is possible to connect the columns of connecting fibers extending in the height direction to each other along the surface of the core, increasing the strength of the sandwich panel. Preferably, successive columns are connected along two opposite surfaces of the core.

The connecting fibers in the overlap part extend preferably in one or more directions selected from a height direction of the sandwich panel or at one or more angles with respect to a height direction of the panel or in a combination of two or more of these directions. This makes the sandwich structure resistant against pulling which would move the different layers apart, both during production of the sandwich panel as in the finished sandwich panel, and better mechanical properties and an increased pressure and shear strength are provided. Mechanical strength and compressive strength in the height direction can be further improved if at least part of the connecting fibers are extending at an angle relative to the height of the sandwich panel. The connecting fibers which extend in the height direction of the panel provide a plurality of columns in the height direction of the sandwich panel. Successive columns are connected to each other along the surface of the sandwich panel in at least one direction. The connecting fibers are thus applied as a plurality of rows of columns, connected to each other by connecting fibers. The overlap part extends preferably in the direction of these rows of interlocking connecting fibers.

This invention also relates to a method for producing a sandwich panel, as defined in claim 8.

In a method the first sheet, the core and the second sheet are preferably also at least partially connected to each other by means of connecting fibers of a fibrous reinforcing material extending in the height direction of the sandwich structure.

Next, the sandwich panel is preferably impregnated with a resin such as a curable thermosetting resin which is cured or a thermoplastic material using pultrusion.

Connecting two or more adjacent composite panels for creating a large area, for example for use as road surfaces, as a floor for a bridge or runway for aircraft, usually with a temporary character, is in itself known. To obtain a connection of sufficient strength, in most cases, an aluminum profile is applied in the adjacent upright side wall of each panel, which includes a recess in which for example an eight-shaped profile fits for connecting the panels.

Panels using this connection method, however, have the disadvantage that delamination occurs readily under shear loading, especially at the interface between aluminum and fiber-reinforced skin layer.

A connection system for composite panels can be provided, which does not affect the bending strength and mechanical strength of the panel and is less subject to delamination.

This objective is achieved by a panel or a set of panels comprising a first sandwich panel provided with first connecting means extending along at least a part of a first upright side wall of the first sandwich panel, a second sandwich panel provided with second connecting means extending along at least part of a second upright sidewall of the second sandwich panel for connecting the first and second sandwich panel, characterized in that the first connecting means are at least partially executed as a single piece with the first sandwich panel and second connecting means at least partially executed as a single piece with the second sandwich panel.

By implementing the connecting means as a single piece with the rest of the panel, it is possible to minimize the risk of loosening of the connection means under load with respect to the panel, extending the useful life and load capacity of interconnected panels. The weight gain of the panel by the presence of the connecting means can be minimized, where the presence of additional profiles made of materials foreign to the panel, such as aluminum, usually entails an excessive weight gain. Another advantage is that the process of producing this panel is facilitated by executing the connection means in a single piece with the panel, since there is no need to incorporate profiles that are alien to the panel. This allows the panel to be produced in a single continuous process, with minimal manual intervention, reducing the risk of errors, and minimizing the increase in production costs.

The invention is further explained in the attached figures and figure description.
Figure 1A shows a possible embodiment of the sandwich panel of this invention.
Figure 2 illustrates a problem that occurs in producing a sandwich panel.
Figure 3A - 3D shows first connecting means of a first sandwich panel, second connecting means of a second sandwich panel, and third connecting means.
Figure 4A - 4D shows first connecting means of a first sandwich panel, second connecting means of a second sandwich panel, and third connecting means.
Figure 5 shows first connecting means of a first sandwich panel and second connecting means of a second sandwich panel.
Fig. 6 shows an example of rows of connected connecting fibers.
Figure 7 shows a view of a sandwich panel in disassembled parts.

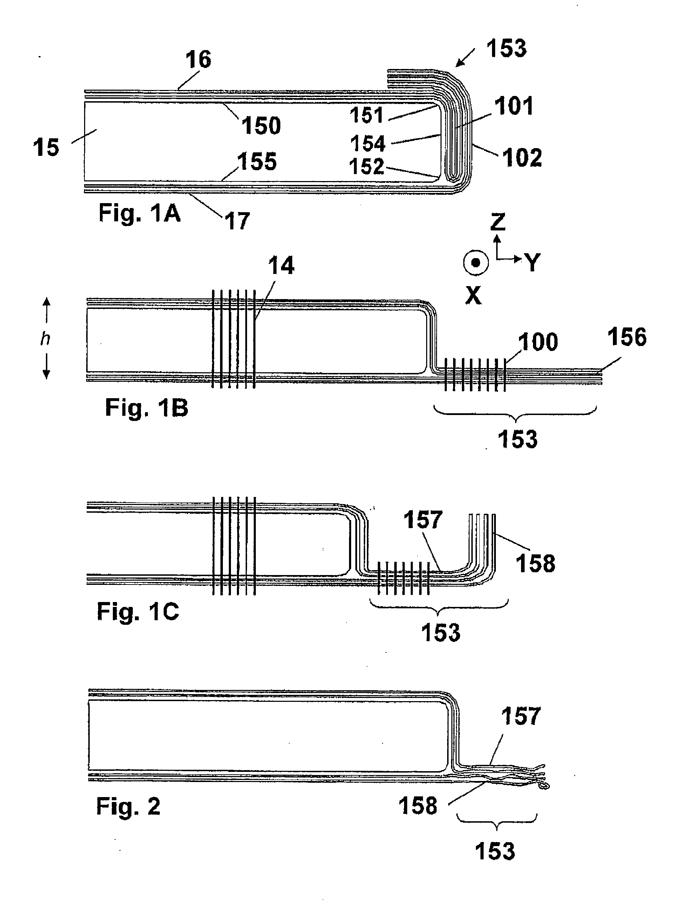

The preferred embodiment shown in Figure 1A of the present invention and B of the sandwich panel 1 is made of composite material, and includes a first and a second sheet of fabric 16, 17 of a fibrous reinforcing material to form a first and second skin of the sandwich panel. Between the first and second skin there is a layer of a core material 15. Instead of a tissue, a fleece, a mat, a fabric of fiber-like reinforcing material may also be used or any other sheet deemed appropriate by the person skilled in the art. The first and second skin can be made from the same material, they can also be made from different materials. The first skin can be made from one sheet-like layer of a material as described above, or two or more adjacent layers of the same material or different materials.

To form the skin, several sheets are placed above each other, with two superimposed sheets overlapping completely. It is also possible for superposed sheets to only partially overlap, and for example to provide a crossed arrangement, or any other arrangement.

The preferred embodiment shown in Figure 1A of the present invention, B and C of the panel, at least a first section 101 of the first sheet 16 protrudes with respect to the core 15, especially with respect to a first edge 151 of the first or upper surface 150 of the core 15. At least a second section 102 of the second sheet 17 protrudes with respect to the core 15, particularly with respect to a second edge 152 lying opposite the first edge of the second or bottom surface 155 of the core 15.

The first part 101 may protrude over the same distance with respect to the core 15 as the second part 102, or over a different distance. The first 101 or second part 102, respectively can be independently protruding with respect to the core in the longitudinal and/or transverse direction of the core. The first and second parts 101 and 102 may extend longitudinally relative to the lateral edges of the core in transverse direction relative to the long edges of the core, or against each other edge or in any other direction. Preferably, the first and second parts 101, 102 protrude with respect to a long edge of the core, i.e. the edge which extends in the displacement direction x in which the panel moves through the connecting fiber application apparatus. This allows the optimal integration of formation of protrusions in the method and apparatus of this invention.

The first 101 and second part 102 of respectively the first and second sheets 16, 17 are positioned so that they at least partially overlap and thereby define an overlap part 153. The first and second parts 101, 102 may fully or partially overlap. Overlap may occur in longitudinal or transverse direction of the overlap section 153, or in any other direction or a combination of two or more directions. Preferably, the first and second part overlap fully or partly in longitudinal and transverse direction of the overlap section 153.

In the overlap part 153, the first and second parts 101, 102 may be directly, or nearly adjacent, or positioned at a distance from each other, whereby one or more interlayers of a further material are applied between the first and second part 101, 102. The intermediate layer may be executed in each material deemed suitable by the person skilled in the art, and could be a film, mat, fabric or any other sheet of a fibrous reinforcing material, but also a foam panel, for example a synthetic foam can be suitably used. In at least some part of the overlap part, the first and second parts 101, 102 are connected by connecting fibers 100. Connecting fibres can be applied, made for connecting the first and second parts 101, 102 over the entire overlap part 153 or only part thereof.

Depending on the intended application, the overlap part 153 can be provided at different positions relative to the upright side: for example near the upper side of the core or panel, for example at the lower side of the core or the panel as shown in Figure 1b and 1C, or at any position in between. Depending on the intended application, the overlap part 153 can be provided at different positions relative to the upright side 154: for example, directly adjacent to the upright side 154 or at a distance therefrom. In the latter case, the space between the core and the overlap part is usually filled by another material to ensure that the initial position of the top and bottom sheets is maintained.

The overlap section 153 is folded back along the vertical side of the core towards the first surface 150 of the core, as shown in Figure 1A. In the in Figure 1A shown embodiment, the first sheet 16 is first folded from the first edge 151 of the first surface 150 of the core 15, along an upright side 154 of the core, adjacent to the first surface, toward the second surface 155 of the core. In this way, an overlap part 153 is provided in which a part of the first sheet 16 extends from the upright side 154 of the core 15, adjacent to the part of the second sheet 17 which also protrudes relative to the core 15. The overlap part 153 is then folded back along the upright side 154 of the core 15 towards the first or upper surface 150 of the core 15. After impregnation with resin, the overlap part 153 forms a single piece with the rest of the sandwich panel 1. The presence of fibrous reinforcing material 101, 102 along the vertical side 154 enables a significant improvement of the strength of the sandwich panel.

As shown in Figure 1C the overlap part 153 extends with respect to the core at the level of a bottom surface 155 of the core, and is a part of the overlap part 153 at a distance from the upright side 154 of the core 15 folded back towards the first surface 150 of the core 15. In that case, the overlap part is for example used as coupling means for connecting two or more sandwich panels. As part of the first sheet extends along the upright side 154 of the core, it enables a significant improvement of the strength of the sandwich panel.

The overlap part 153 has a tip 156, which functionally can be formed if desired.

An overlap part 153 as described above can be applied along one side of the sandwich panel. Preferably, however, such an overlap part is provided at opposite vertical sides of the sandwich panel, which extend in the direction x in which the sandwich structure is moved through the connecting fiber applicator apparatus. In this way the formation of the overlap part 153 can be integrated into a continuous sandwich panel production process, in which continuous core material and upper and lower sheets of fibrous reinforcing material are fed, are linked and are impregnated with resin. By providing such an overlap part 153, a sandwich panel can be obtained with uniform mechanical properties, e.g. compressive strength, bending strength and bending strength, over the entire surface of the panel.

Suitable materials for use as sheets of fibrous reinforcing material for the skin include fiberglass, synthetic fiber for example a polyester, polyamide, aramid and polyethylene fiber, carbon fiber, metal fibers, natural fibers such as cotton or flax, or a combination of two or more materials. The person skilled in the art is able to match the nature of the material to the intended use for the sandwich panel. The above materials have the advantage that their tendency to crumble is low and that they are not excessively brittle which would result in erosion along the edges when applying the connecting fiber. The fibrous reinforcing material is selected so that it is sufficiently stable at the temperature at which the sandwich structure is impregnated with resin and the temperature at which the resin is cured.

The core 15 is usually manufactured in a synthetic foam such as polyurethane foam, polypropylene foam, PVC foam, but any other material deemed suitable by the person skilled in the art may be used, such as a honeycomb core made of plastic or wood or metal or a metal foam. The material for the core is selected so that it is sufficiently stable at the temperature at which the sandwich structure is impregnated with resin and the temperature at which the resin is cured. The core can be produced from one layer of a pre-cited material. If desired, the core can be produced of several stacked layers of material, which are connected to each other. Successive layers can be composed from the same or different materials. Between successive layers, one or more layers of a fibrous reinforcing material can be applied. It is also possible to use as a core material synthetic foam wound in a sheet of a fibrous reinforcing material, or a plurality of such adjacent cores.

In the core 15, successive layers of a first sheet of fibrous reinforcing material, a core and second sheet of fibrous reinforcing material, are connected through connecting fibers. The core can also be composed from a stacked plurality of such sets, which are interconnected by means of connecting fibers extending in height or height direction of the sandwich panel, as described below.

The density of the material from which the core 15 is made, may vary within broad limits depending on the intended application. Materials with a higher density, e.g. above 40 or 50 kg / m³, can increase the strength of the sandwich panel. Materials with a lower density hardly make any contribution to the strength of the sandwich panel 1.

In the overlap part the first and second fabric 16, 17 and any intermediate layers are connected by means of connecting fibers 100. Preferably the connecting fibers 100 extend in height direction h also known as thickness direction or z direction of the sandwich panel. This is schematically shown in Figure 1B and 1C. The connecting fibers can be applied across the entire width in the y-direction, and the entire length in x-direction of the overlap part or over just a part of the width and/or longitudinal direction. Preferably, however, the connecting fibers are applied over almost the entire width and length of the overlap section 153, as this will benefit the uniformity of mechanical properties. If an overlap part 153 with varying properties is intended, it can be chosen not to locally apply connecting fibers.

In the sandwich panel, the first and second fabric 16, 17 and core 15 preferably also connected by means of connecting fibers 14 of fibrous reinforcing material. The connecting fibers extend preferably in the height direction h also known as thickness direction or z-direction of the panel. Connecting fibres can be applied to almost the entire length and width of the sandwich panel or parts thereof. If a sandwich panel with uniform mechanical properties is intended, reinforcing fibers are preferably distributed uniformly or almost uniformly over the sandwich panel. If a sandwich panel with varying mechanical properties is intended, it can be to chosen not to locally apply connecting fibers. Due to this connection 14, 100, the sandwich structure and the overlap part 153 are more resistant to tensile stress, moving the different layers apart, andshow a higher resistance to shear.

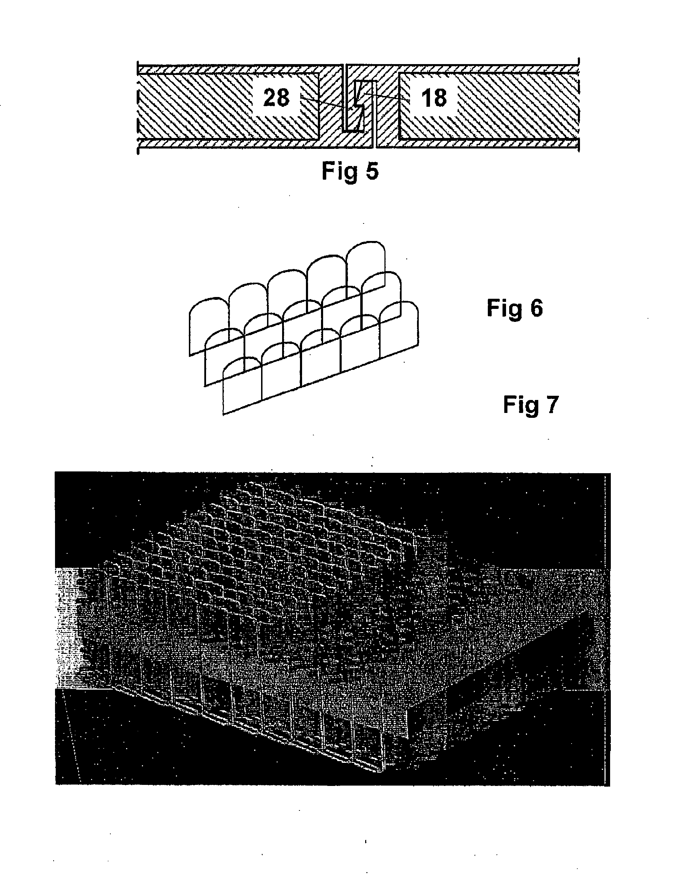

The connecting fibers 14, 100 provide a plurality of columns mounted at a distance from each other and extending in the height h or z-direction of the sandwich panel, or the overlap part 153, respectively. In the context of the present invention both continuous and discrete connecting fibers can be used. Preferably continuous connecting fibers are used, whereby at least a part of the ends of successive columns 14 are connected to each other in at least one direction, this can be the longitudinal or transverse direction of the sandwich panel. The connection between successive columns usually extends along the first surface 150 of the sandwich panel and along the first surface 157 of the overlap section 153. The connection between adjacent columns preferably also extends along the second surface 155 of the sandwich panel and along the second surface 158 of the overlap part. The connecting fibers are thus applied as a plurality of rows of columns of connecting fibers connected to each other. Five or eight such rows, respectively are shown in Figure 1B. In practice, successive columns are usually connected in the direction in which the sandwich structure is moved through the apparatus which applies the connecting fibers 14, 100. This is usually the length direction of the sandwich structure, as shown in Figure 6 and 7. It is also possible to connect the column fiber 14, 100 in two or more directions, in the longitudinal x, in transverse direction y and/or one or more additional directions at an angle of those directions. Preferably, successive columns connecting fibers of 14, 100 are connected, but locally an interruption in the connection may occur, without affecting the mechanical strength of the panel too much. One can also choose not to provide a local connection between adjacent columns connecting fibers to provide a panel with a varying controlled compressive strength, flexural strength and bending resistance to provide. The presence of a connection of the connecting fibers 14, 100 along the first 150 and preferably also along the second surface 155 of the core allows the mechanical strength of the sandwich panel to increase substantially.

The connecting fibers 14, 100 may extend substantially in the height direction of the sandwich panel as shown in Figure 1B. Further, the connection fibers 14, 100 may run substantially parallel to the upright side walls of the sandwich panel, or one or more directions at an angle to this direction, i.e. at one or more angles relative to the height h. This allows the mechanical properties and compressive strength of the sandwich panel to improve further. The connecting fibers 14, 100 can extend, for example at an angle of 30°, 45° or 60° with respect to the height or at any other angle deemed appropriate by the person skilled in the art. Within the context of this invention, it is also possible that connecting fibers 14, 100, extend at two or more different angles relative to the height of the panel, as shown in Figure 1C. The connecting fibers extend preferably over the entire height of the panel, i.e. from a top sheet 16, through the top sheet 16, the core 15 and a bottom sheet 17.

The connecting fibers 14, 100 will usually take the form of individual columns extending in the height direction h of the sandwich panel. The distance between adjacent columns may be chosen to be larger or smaller depending on the connecting technique used and the mechanical properties desired in the light of the intended application. Within the context of this invention, it is also possible in the sandwich panel and/or overlap part 153 to group a plurality of columns to provide a locally increased density of connecting fibers and thus additional local reinforcements such as shown in Figure 1C.

For connecting the upper and bottom sheets 16, 17 with the core 15, and for connecting the upper and bottom sheets 157, 158 of the overlap part 153 the same connecting fiber can be used, or different ones. Preferably, however, the same connecting fibers are used, because this allows for a simplified automation of the process.

If desired, to connect the core with the skin layers and to connect the layers within the overlap part, discrete fibers may be used as connecting fibers in the form of individual, disconnected columns, but preferably continuous fibers are used, with successive columns being interconnected, as described above. Suitable examples of continuous fibrous reinforcing materials include a rope, yarn, a strand, a band, etc. For connecting fibers 16, essentially the above-mentioned fibrous reinforcing materials can suitably be used such as fiberglass, synthetic fiber such as a polyester, polyamide, aramid and polyethylene fiber, carbon fiber, metal fibers, natural fibers such as cotton or flax, or a combination of two or more materials.

The connecting fibers 14, 100 can be applied using each technique considered suitable by the person skilled in the art, for example, sewing, quilting, tufting, knitting, or any derivative technique, or a combination of two or more of these techniques, or any other suitable technique for making continuous fibers. The use of these techniques implies that successive columns connecting fibers are connected in the direction in which the sandwich structure is moved through the apparatus. The mentioned connection techniques can be applied by automated apparatuses in a continuously operating system, using the above techniques or combinations thereof, or derivative techniques. A suitable technique for applying discontinuous fiber connection is described e.g. in US-A-3647606 and US5.741.574. According to this procedure for connecting the core and the skin small columns of one or more filaments that are partially coated with an adhesive material are used, which bind the thin columns to the surrounding material of the core. The thin columns can contain metallic or non-metallic wires or combinations thereof. The columns can be made from a porous solid, or they may be hollow inside.

For applying the connecting fibers, the sandwich panel is pierced, whereby a channel is formed, wherein of the connecting fibers are included.

Preferably, the first and second sheets 16, 17, the overlap part 153 and the connecting fibers 14, 100 are impregnated with resin to form a sandwich panel and to unite all parts of a structure based on the above sandwich structure. The resin will not only impregnate the aforementioned parts, but also fill the channels which were formed by applying the connecting fibers. Suitable resins for use in this invention are thermoplastic or thermosetting. Examples of suitable resins are unsaturated polyester resins, vinyl ester resins, epoxy resins, phenol resins, polyurethane resins. The resin is preferably selected so that it does not react with the material of the core 15 and the fiber-like reinforcing materials 16, 17, 14, 100, 101, 102.

In a preferred method for producing the above described sandwich panel 1, a material for providing the core 15 as described above, is supplied, and at a first and second opposing surface 150, 155 of the core, preferably the upper and the lower surface of the core, respectively, at least a first and second sheets 16, 17, of a fibrous reinforcing material is supplied. The first part 101 of the first sheet 16 which with respect to the first longitudinal edge 151 of the first surface 150 of the core 15 protrudes, is the edge which extends along a first upright side 154 in the displacement direction of the core, and the second part 102 of the second sheet 17 which with respect to the second longitudinal edge 152 of the second surface 155 of the core 15 opposing the first surface protrudes, is the edge which extends along a first upright side 154 in the displacement direction of the core, are positioned adjacently, so that they do overlap at least partially, preferably completely, and are then connected in the height direction h of the sandwich panel. Suitable techniques for establishing the connection are for example, sewing, sewing, knitting, tufting.

The connecting fibers extending in the height direction h can be applied over part or the whole width of the overlap part 153, this is the y-direction shown in Figure 1. The connection may extend over a part or the whole length of the overlap part 153, this is the x-direction shown in Figure 1. By the connection the first and second sheets 16, 17 are positioned at a predetermined position relative to each other and kept in this position throughout the rest of the production process, as long as the connection is maintained. More specifically, by the connection, the first and second sheets 16, 17 are positioned in a predetermined position relative to each other and kept in this position before the sandwich structure is impregnated with resin. In particular the first and second sheets 16, 17 are positioned in a predetermined position relative to each other and kept in this position during the displacement of the sandwich structure of the fiber application apparatus into and through the apparatus for the impregnation of the sandwich structure with resin, and any other movement, before the resin cured.

When establishing the connection, the first 101 and second 102 protruding parts are pierced. Thereto needles or equivalent means are generally used. The piercing implies that an area, often in the form of channels is created in which the connecting fibers 100 are included. The core 15 and at least first and second sheets 16, 17 fibrous reinforcing materials are preferably also connected to each other. Connecting fibers can be made using any technique considered suitable by the person skilled in the art e.g. by sewing, stitching, knitting, tufting. However, any other equivalent technique can be used. Preferably, a technique is used whereby the first and second sheets 16, 17, the core 15 are pierced by a fiber application apparatus, to provide a channel through which connecting fibers are drawn for connecting the core 15 and first and second sheets 16, 17. Thus, so to speak a plurality of successive columns of connecting fibers is formed. The connecting fibers 100 in the overlap section 153, and preferably also the connecting fibers connecting the first sheet, the core and the second sheet 14, 15, 16 can be applied in one or more directions selected from a height direction of the sandwich panel 1, 2 or at one or more angles to a height direction of the sandwich panel or a combination of two or more of these directions.

At least a part of the successive columns of connecting fibers are preferably connected to each other, in the direction in which the sandwich structure is moved with respect to the fiber connecting apparatus. This allows to form a plurality of parallel or unparallel rows of columns of connecting fibers, connected to each other, by moving the sandwich structure with respect to a connecting fiber application apparatus.

During the piercing, during the phase in which for example needles penetrate the overlap part 153 and/or the sandwich structure, respectively, the overlap part 153, or the sandwich structure, respectively preferably is not subjected to a displacement movement. In a phase in which the sandwich structure is not penetrated, the sandwich structure is preferably moved with respect to the fiber application apparatus. In this way the risk is minimized that too wide openings in the core and the skins of fibrous reinforcing material are formed, and too large spaces would be created for the inclusion of resin, which would affect the mechanical properties aversively and increase the weight of the sandwich panel unnecessarily. Because the first and second sheets 16, 17 are connected to each other to form an overlap part 153 on opposite sides of the sandwich panel, a volume is defined within which the flow of the resin to impregnate the sandwich structure with resin is limited. Thus, there is minimal risk that resin flows out of the sandwich panel, foams and jams the machine.

Connecting the first and second sheets 16, 15 and 17 with the core and connecting the first and second parts 101, 102 may be performed simultaneously or in separate process steps. Preferably, however, both connections are simultaneously performed since this process provides an economically more attractive process. More preferably, both connections are established using one machine.

The thus connected structure is preferably impregnated with a thermoplastic or a thermosetting resin to combine the first and second sheets 16, 17 and the core 15 to a single piece, as well as the first and second parts 150 and 155 in the overlap part 153. Usually this is done in a pultrusion process, in which the sandwich panel is moved when the connecting fiber application apparatus, most preferably in the form of needles, does not penetrate the sandwich structure and is drawn out from it. The resin penetrates the first and second sheets 16, 17, the first and second parts 101, 102 of the first and second sheets, respectively, the connecting fibers 14, 100 and the channels in which the connecting fibers are located. When using a thermosetting resin, the resin will usually be cured at elevated temperatures. The columns with connecting fibers thus filled with resin provide a high compressive strength and bending resistance to the sandwich panels.

Within the context of this invention it is possible to impregnate only the overlap part 153 with resin but preferably, the sandwich panel including the overlap part 153 is impregnated with resin.

The overlap part 153 provides a resin-impregnated strip which, possibly using a mold, may take any position and can be formed in any shape, taking into account the intended application.

The above described sandwich panel is suitable for a wide range of applications, for example as a panel for constructing walls, to construct a (temporary) runway, a bridge, to construct the deck of an aircraft carrier, etc.., These will usually temporary. The overlap section 153 may further be used as connecting means for connecting adjacent panels.

The invention also relates to a method for producing a sandwich structure as defined in claim 8.

The invention also relates to the connected sandwich structure as described above which has not or not yet been impregnated with resin.

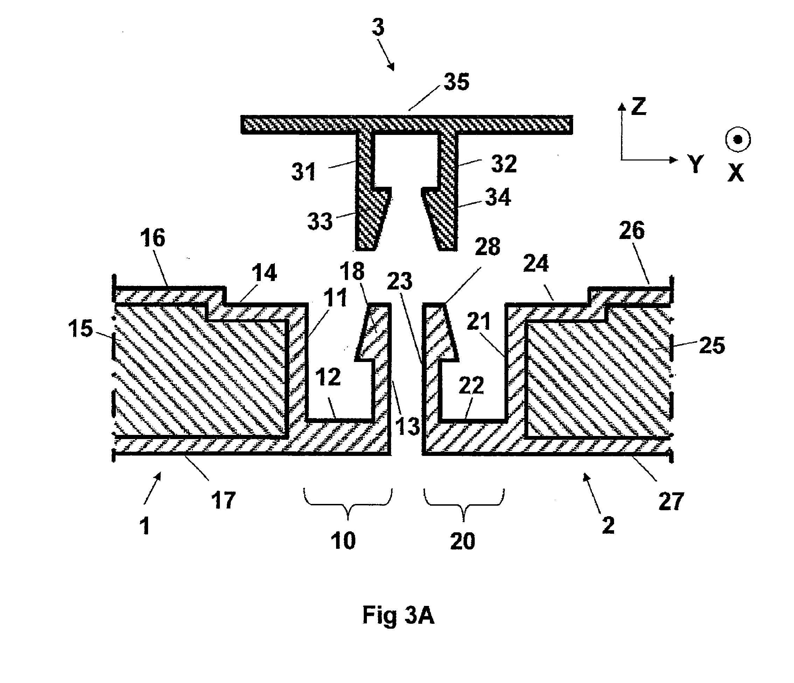

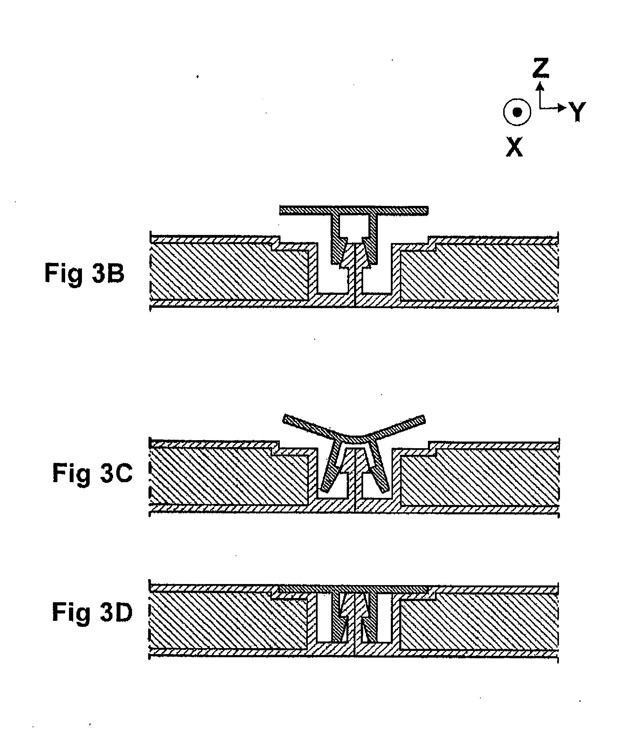

Fig. 3A shows a first preferred embodiment of a connection integrated in a sandwich panel , in which a first and a second panel 1,2 are connected through a connector 3, 10, 20. The in Figure 3 shown set includes a first panel 1, with first connecting means 10 extending along a first upright side wall 11 of the first panel, a second panel 2, with second connecting means 20 extending along the second upright sidewall 21 of the second panel for connecting the first and second panel 1, 2, in which the first connecting means 10 are implemented as a single piece with the first panel and second connection means 20 are implemented as a single piece in the second panel 2. The set includes preferably also third connecting means 3, in which the first and second connection means 10, 20 on one hand and third connection means 3 on the other hand comprise complementary co-operating parts, with the third connecting means 3 grip in the first and second connection means 10, 20 in the connection direction and in height direction (h) of the panels 1, 2 for holding the first and second connection means 10, 20 in an orientation such that they are facing each other.

In the embodiment of Figure 3, the first connecting means 10 comprise an overlap section 153 with a first wall section 12 which extends from the first upright side wall 11 towards the second panel 2. The first connecting means 10 further comprise a with the first wall section 12 associated protrusion 18 mounted at a distance from the first sidewall 11 and oriented in the height direction of the panel 1. In a practical embodiment the first connection means 10 include a first wall part 12 running parallel with an upper surface 16 of the panel 1, which is connected with a second upright part 13, which at a free end is provided with a tooth-like protrusion or tooth 18 . One side of the tooth 18 of the first connecting means 10, directed to the first panel 1 is preferably chamfered. Instead of a tooth, any other form deemed suitable by the person skilled in the art can be used. Possibly more teeth 18 may also be provided on the upright section 13. The protrusion 18 is mounted at a distance from the first sidewall 11 in order to provide space for the inclusion of third connecting means 3, in particular the third protrusion 33 on the third connecting means 3. Protrusion 18 has an orientation in the height direction of panel 1. The second panel 2 has similar components but in mirror image of the first panel 1.

The third connection means 3 includes a tab 35 which extends in the direction Y in which the connection between the first and second panel 1, 2 is established with respect to which a third and fourth protrusion 31, 32 extend in height direction Z of the panel. The third and fourth protrusions are at a distance from each other so that a space is provided for including the first and second connection means 10, 20. The third and fourth protrusion 31, 32 may take for example the form of a first and second leg 31, 32, of which one end is attached to the tab 35 and the opposing end 33, 34 is profiled to cooperate with and to seize in the tooth-like protrusion 18 and 28 of the first and second connection means 10, 20. The ends 33, 34, for example, may also take the form of a tooth. A to the first and second connection means 10, 20 facing side of the third and fourth protrusion 33, 34 is preferably chamfered.

The third connection means 3 can be executed in any material deemed suitable by the person skilled in the art, e.g. in metal or synthetic material, but they are preferably executed in a fibrous reinforced synthetic material. More preferably, the third connecting means are produced by pultrusion.

Figures 3B-3D shows how a connection between the first and second panel shown in Figure 3A is practically achieved. In Fig 3C a force is exerted on the third connection means 3 in its height direction and the direction of the panels. The bevelled sides of the teeth 33 and 34 of the third connecting means 3 are moved over corresponding bevelled sides 18, 28 of the first and second connection means 10, 20. Through this operation, the panels 1, 2 are attracted towards each other. The function of the bevelled sides 18, 28 is to convert a vertical displacement of the third connecting means 3 and a vertical force into a horizontal displacement of the first and second panel 1, 2 where the first and second panel are drawn towards each other.

The third connecting means 3 are preferably executed such that as the vertical displacement of the third connection means 3 increases, an elastic deformation takes place whereby the teeth 33 and 34 are moved apart. To facilitate this, the tab 35 of the third connecting means 3 are preferably not executed too thick so that this open-folding is possible, but not too thin so that the projected power needed for the horizontal and vertical displacement of panels 1, 2 with relative to each other, can be born. The configuration of the first and second connection means 10, 20 is preferably such that they direct the open-folding of the third connection means 3, as shown in Fig 3C. Note that Fig 3C is only a snapshot and this in order to establish this connection.

In the connected condition of Fig 3D, the free end of the third and fourth protrusion 33, 34 of the third connection means rests on the first wall section 12, 22 of the first and second connecting means and the free ends of the first and second tooth 18, 28 are in contact with the side of the tab 35 of the third connecting means 3 directed at the first and second panel 1, 2. The third protrusion 33 in transverse direction grips in the first protrusion 18, and the fourth protrusion 34 grips in transverse direction in the second protrusion 28. The third and fourth protrusion 33, 34 exert a force pointed at each other on the first and second connection means 10, 20, forcing them apart and make sure that the first and second panel are held together in the connection direction of the first and second panel. Because the third protrusion 33 also grips in height direction in the first connection means 10, preferably in the first tooth 18, and the fourth protrusion 34 also grips in height direction in the second connection means 20, preferably in the second tooth 28, and the first and second tooth 18, 28 and the third and fourth protrusion 33, 34 are clamped between tab 35 of the third connecting means and the wall sections 12 and 22 of the first and second connectors, is the displacement of the first and second panel relative to each other in the height direction hindered. The forces in horizontal XY and vertical directions Z are accommodated by the shown contact surfaces.

The first and second panel 1, 2 are preferably formed so that a recess 14 is present on the outer surface 16 for receiving the tab 35 so level differences between the panels 1, 2 and the third connection means 3 can be reduced to a minimum.

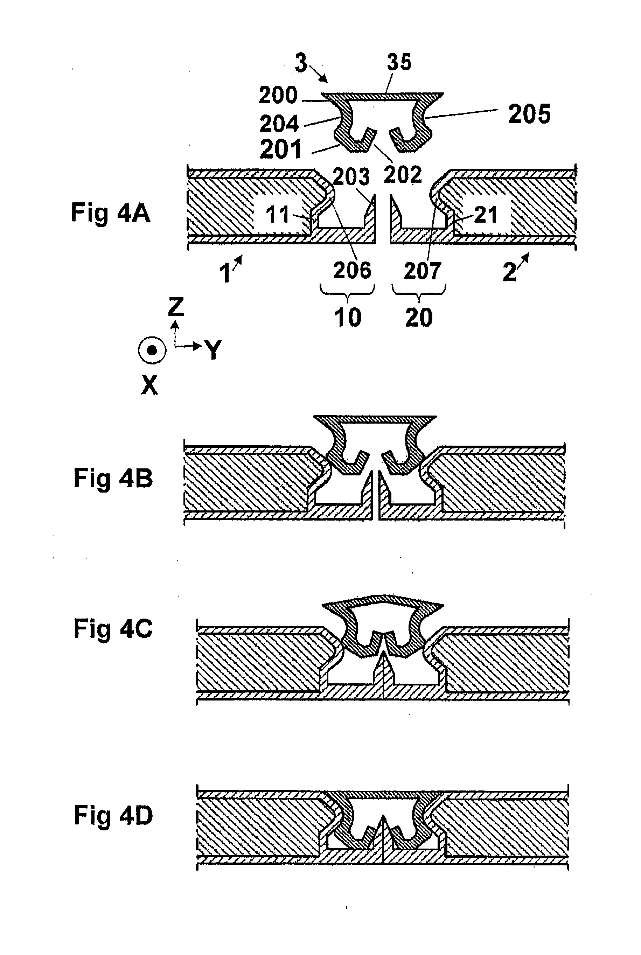

Fig 4A-D shows a second embodiment of the set. In Figure 4A the two panels 1, 2 are present next to each other. In Fig 4B, the third connection means 3 is positioned above the two panels as shown in the figure. The bevelled sides of the first, second and third connectors make contact, and third connection means 3 is positioned above and between the first and second panel. In Figure 4C a downward force is exerted on the third connection means 3 and it is displaced in the direction of the first and second connection means 10, 20 with the movement of the bevelled edge 201 along the upright and curved sidewall 11 of the first and second profile guided by the shape of the protrusion 206, 207. The third connecting means 3 thereby deform such that they are capable of overcoming the corresponding protrusion 206, 207 in the first and second connection means 10, 20. Meanwhile, contact is established between the inner bevel 202 of the third connecting means 3 and the corresponding point 203 on the first and second connection means 10, 20 of the first and second panel, until the third connecting means 3 are included in the space between the first and a second panel 1, 2. Because the protrusion 206, 207 in the upright sidewalls 11, 21 of the first and second panel is included in corresponding recesses 204, 205 in the third connection means 3, the displacement of the panels relative to each other in height is hindered, just as a displacement in the connection direction. The tab 35 of the third connecting means is preferably sufficiently thin to enable the necessary elastic deformation, and sufficiently thick so that the predetermined force required for the horizontal and vertical displacement of the panels relative to each other, can be mitigated.

Figure 5 shows a third embodiment of a connection. This connection is very similar to that of Fig 1A, except that no third connection means 3 is necessary and that the first tooth 18 of the first panel 1 points in a direction transverse to the connection direction along the panels, in the example a upward direction, and the second tooth 28 of the second panel 2 in downward direction.

## Claims

1. A sandwich panel (1) comprising a core (15, 25) with a first and second opposing surface (150, 155), in which the first surface (150) is provided with at least a first sheet (16) of a fibrous reinforcing material, the second surface (155) being provided with at least a second sheet (17) of a fibrous reinforcing material, wherein
- at least a first part (101) of the first sheet (16) which protrudes with respect to a first edge (151) of the first surface (150),
- at least a second part (102) of the second sheet (17) which protrudes with respect to a second edge (152) of the second surface (155) opposing the first edge (151),
- are adjacently positioned to define an overlapping section (153) in which the first and second sheet at least partially overlap,
- in which the first part of the first sheet (101) and the second part of the second sheet (102) are connected in at least a part of the overlapping section (153) by means of connecting fibers of fibrous reinforcing material.
**characterised in that** the overlapping section (153) is folded back along an upright side (154) of the core (15) toward the first surface (16) of the core.

2. A sandwich panel according to claim 1, **characterized in that** the first part of the first sheet (101) and the second part of the second sheet (102) are in at least a part of the overlapping section (153) connected by means of continuous connecting fibers of fibrous reinforcing material (100).

3. A sandwich panel according to one of claims 1 or 2, **characterized in that** the connecting fibers (100) in the overlapping section (153) extend in one or more directions selected with respect to a height direction of the sandwich panel (1, 2) or at one or more angles with respect to a height direction of the sandwich panel or a combination of two or more of these directions.

4. A sandwich panel according to the previous claim, **characterized in that** the connecting fibers (100) are provided in a plurality of rows of connected connecting fibers, and **in that** the overlapping section (153) extends in the direction of the rows of connected connecting fibers (100).

5. A sandwich panel according to any of the preceding claims, **characterized in that** the connecting fibers (100) are stitched, sewn, tufted or knitted or a combination of two or more of these techniques.

6. A sandwich panel according to any of the preceding claims, **characterized in that** the sandwich panel and the overlapping section (153) are impregnated with an uncured thermosetting resin or a thermoplastic material.

7. A sandwich panel according to any of the preceding claims, **characterized in that** the overlapping section (153) extends in longitudinal direction of the sandwich panel.

8. A method for producing a sandwich panel (1) in which a core (15) is supplied in a moving direction wherein
, respectively at least a first and second sheet (16, 17) of a fibrous reinforcing material is supplied to opposite first and second surfaces (150, 155) of the core,
wherein
- a first part (101) of the first sheet (16), which protrudes with respect to a first edge (151) of the first surface (150) of the core and
- a second part (102) of the second sheet (17), which protrudes with respect to a second edge (152) of the second surface (155) of the core opposing a first edge (151),
- are adjacently positioned in such a way that they at least partially overlap and an overlapping section (153) is determined at the core,
- the first and second part (101, 102) are connected by means of connecting fibers (100) of a fibrous reinforcing material, in at least part of the overlapping section,
**characterised in that** the overlapping section (153) is folded back along an upright side (154) of the core (15) toward the first surface (16) of the core to provide a sandwich structure and **in that** the sandwich structure is impregnated with a thermoplastic or thermosetting resin.

9. A method according to the previous claim, **characterized in that** the first sheet (16), the core (15) and the second sheet (17) are connected along at least part of the surface of the core by means of connecting fibers of a fibrous reinforcing material extending in the height direction of the sandwich structure.

10. A method according to the previous claim, **characterized in that** the sandwich panel after application of the connecting fibers (14, 100) is impregnated with a resin, preferably by pultrusion.

11. A method according to any one of the previous claims, **characterized in that** the resin is chosen from a curable thermosetting resin which is cured or a thermoplastic material.

12. A method according to any one of the preceding claims, wherein as connecting fibers (100) use is made of continuous fibers, and where the connecting fibers (100) in the overlapping section (153) extend in one or more directions selected from a height direction of the sandwich panel (1, 2) or at one or more angles with respect to a height direction of the sandwich panel or a combination of two or more of these directions.

13. A method according to any one of the preceding claims, wherein the connecting fibers (100) are applied in height direction of the sandwich structure in such a way that a plurality of rows of connected columns of connecting fibers are formed, by moving the sandwich structure with respect to a connecting fiber application apparatus, where successive columns of connecting fibers are connected to each other in at least one direction, preferably in a direction in which the sandwich structure is moved with respect to the connecting fiber application apparatus.

14. A method according to any one of the preceding claims, wherein upon applying the connecting fibers, a plurality of needles are moved through the sandwich structure and the overlapping section (153), between a retracted position in which the needles do not penetrate the structure and a penetration position and wherein the sandwich structure and connecting fiber application apparatus are moved with respect to each other in the retracted position of the needles.

15. A set comprising a first sandwich panel (1) according to any one of claims 1 to 7 or a sandwich panel obtained by the method of any one of claims 8 to 14, provided with first connecting means (10) which at least partially extend along a first upright side wall (11) of the first sandwich panel (1), a second sandwich panel (2) according to any one of claims 1 to 7 or a sandwich panel obtained by the method of one of claims 8 to 14 , provided with second connecting means (20) which at least partially extend along a second upright side (21) of the second sandwich panel for connecting the first and second sandwich panel (1, 2), in which at least one of the first connecting means (10) is made in one part with the first sandwich panel (1) and at least a part of the second connecting means (20) is made in one part with the second sandwich panel (2).

16. Set according to the previous claim, **characterized in that** the set also comprises third connecting means (3), wherein the first and second connection means (10, 20) on the one hand and the third connection means (3) on the other hand comprise complementary co-operating parts, wherein the third connecting means (3) engage the first and second connection means (10, 20) in the connection direction and height direction (Z) of the panels (1, 2) in order to hold the first and second connection means (10, 20) in a direction which points to each other.

## Patentansprüche

1. Verbundplatte (1), die einen Kern (15, 25) mit einer ersten und einer zweiten, gegenüberliegenden, Fläche (150, 155) umfasst, wobei die erste Fläche (150) mit wenigstens einer ersten Bahn (16) aus einem faserigen Verstärkungsmaterial versehen ist, wobei die zweite Fläche (155) mit wenigstens einer zweiten Bahn (17) aus einem faserigen Verstärkungsmaterial versehen ist, wobei
- wenigstens ein erster Teil (101) der ersten Bahn (16), der in Bezug auf eine erste Kante (151) der ersten Fläche (150) vorspringt,
- wenigstens ein zweiter Teil (102) der zweiten Bahn (17), der in Bezug auf eine zweite Kante (152) der zweiten Fläche (155), gegenüber der ersten Kante (151), vorspringt,
- aneinandergrenzend angeordnet sind, um eine Überlappungssektion (153) zu bilden, in der sich die erste und die zweite Bahn wenigstens teilweise überlappen,
- wobei der erste Teil (101) der ersten Bahn und der zweite Teil (102) der zweiten Bahn in wenigstens einem Teil der Überlappungssektion (153) mit Hilfe von Verbindungsfasern aus einem faserigen Verstärkungsmaterial verbunden sind,
**dadurch gekennzeichnet, dass** die Überlappungssektion (153) entlang einer aufrechten Seite (154) des Kerns (15) zu der ersten Fläche (16) des Kerns hin zurückgeschlagen ist.

2. Verbundplatte nach Anspruch 1, **dadurch gekennzeichnet, dass** der erste Teil (101) der ersten Bahn und der zweite Teil (102) der zweiten Bahn in wenigstens einem Teil der Überlappungssektion (153) mit Hilfe von durchgehenden Verbindungsfasern (100) aus einem faserigen Verstärkungsmaterial verbunden sind.

3. Verbundplatte nach einem der Ansprüche 1 oder 2, **dadurch gekennzeichnet, dass** sich die Verbindungsfasern (100) in der Überlappungssektion (153) in einer oder mehreren Richtungen, ausgewählt in Bezug auf eine Höhenrichtung der Verbundplatte (1, 2), oder in einem oder mehreren Winkeln in Bezug auf eine Höhenrichtung der Verbundplatte oder einer Kombination von zwei oder mehr dieser Richtungen erstrecken.

4. Verbundplatte nach dem vorhergehenden Anspruch, **dadurch gekennzeichnet, dass** die Verbindungsfasern (100) in mehreren Reihen von verbundenen Verbindungsfasern bereitgestellt werden, und dadurch, dass sich die Überlappungssektion (153) in der Richtung der Reihen von verbundenen Verbindungsfasern (100) erstreckt.

5. Verbundplatte nach einem der vorhergehenden Ansprüche, **dadurch gekennzeichnet, dass** die Verbindungsfasern (100) geheftet, genäht, gesteppt oder gewirkt oder eine Kombination von zwei oder mehr dieser Techniken sind.

6. Verbundplatte nach einem der vorhergehenden Ansprüche, **dadurch gekennzeichnet, dass** die Verbundplatte und die Überlappungssektion (153) mit einem ungehärteten warmaushärtenden Harz oder einem thermoplastischen Material imprägniert sind.

7. Verbundplatte nach einem der vorhergehenden Ansprüche, **dadurch gekennzeichnet, dass** sich die Überlappungssektion (153) in Längsrichtung der Verbundplatte erstreckt.

8. Verfahren zum Herstellen einer Verbundplatte (1), wobei ein Kern (15) in einer Bewegungsrichtung zugeführt wird beziehungsweise wenigstens eine erste und eine zweite Bahn (16, 17) aus einem faserigen Verstärkungsmaterial zu einer ersten und einer zweiten, gegenüberliegenden, Fläche (150, 155) des Kerns zugeführt werden, wobei
- ein erster Teil (101) der ersten Bahn (16), der in Bezug auf eine erste Kante (151) der ersten Fläche (150) vorspringt, und
- ein zweiter Teil (102) der zweiten Bahn (17), der in Bezug auf eine zweite Kante (152) der zweiten Fläche (155), gegenüber einer ersten Kante (151), vorspringt,
- aneinandergrenzend auf eine solche Weise angeordnet werden, dass sie einander wenigstens teilweise überlappen und eine Überlappungssektion (153) an dem Kern festgelegt wird,
- wobei der erste und der zweite Teil (101, 102) in wenigstens einem Teil der Überlappungssektion mit Hilfe von Verbindungsfasern (100) aus einem faserigen Verstärkungsmaterial verbunden sind,
**dadurch gekennzeichnet, dass** die Überlappungssektion (153) entlang einer aufrechten Seite (154) des Kerns (15) zu der ersten Fläche (16) des Kerns hin zurückgeschlagen wird, um eine Verbundstruktur bereitzustellen, und dadurch, dass die Verbundstruktur mit thermoplastischem oder warmaushärtendem Harz imprägniert wird.

9. Verfahren nach dem vorhergehenden Anspruch, **dadurch gekennzeichnet, dass** die erste Bahn (16), der Kern (15) und die zweite Bahn (17) entlang wenigstens eines Teils der Fläche des Kerns mit Hilfe von Verbindungsfasern aus einem faserigen Verstärkungsmaterial, die sich in der Höhenrichtung der Verbundstruktur erstrecken, verbunden werden.

10. Verfahren nach dem vorhergehenden Anspruch, **dadurch gekennzeichnet, dass** die Verbundplatte nach dem Anbringen der Verbindungsfasern (14, 100) mit einem Harz, vorzugsweise durch Zieh-Strangpressen, imprägniert wird.

11. Verfahren nach einem der vorhergehenden Ansprüche, **dadurch gekennzeichnet, dass** das Harz ausgewählt ist aus einem aushärtbaren warmaushärtenden Harz, das ausgehärtet wird, oder einem thermoplastischen Material.

12. Verfahren nach einem der vorhergehenden Ansprüche, wobei als Verbundfasern (100) Gebrauch von durchgehenden Fasern gemacht wird und wobei sich die Verbundfasern (100) in der Überlappungssektion (153) in einer oder mehreren Richtungen, ausgewählt von einer Höhenrichtung der Verbundplatte (1, 2), oder in einem oder mehreren Winkeln in Bezug auf eine Höhenrichtung der Verbundplatte oder einer Kombination von zwei oder mehr dieser Richtungen erstrecken.

13. Verfahren nach einem der vorhergehenden Ansprüche, wobei die Verbundfasern (100) in Höhenrichtung der Verbundstruktur auf eine solche Weise aufgebracht werden, dass mehrere Reihen von verbundenen Spalten von Verbindungsfasern gebildet werden, durch das Bewegen der Verbundstruktur in Bezug auf eine Verbindungsfaser-Anbringungsvorrichtung, wobei aufeinanderfolgende Reihen von Verbindungsfasern in wenigstens einer Richtung miteinander verbunden werden, vorzugsweise in einer Richtung, in der die Verbundstruktur in Bezug auf die Verbindungsfaser-Anbringungsvorrichtung bewegt wird.

14. Verfahren nach einem der vorhergehenden Ansprüche, wobei nach dem Anbringen der Verbundfasern mehrere Nadeln durch die Verbundstruktur und die Überlappungssektion (153) bewegt werden, zwischen einer eingezogenen Stellung, in der die Nadeln die Struktur nicht durchdringen, und einer Durchdringungsstellung, und wobei in der eingezogenen Stellung der Nadeln die Verbundstruktur und die Verbindungsfaser-Anbringungsvorrichtung in Bezug aufeinander bewegt werden.

15. Satz, der eine erste Verbundplatte (1) nach einem der Ansprüche 1 bis 7 oder eine durch das Verfahren nach einem der Ansprüche 8 bis 14 gewonnene Verbundplatte, versehen mit ersten Verbindungsmitteln (10), die sich wenigstens teilweise entlang einer ersten aufrechten Seitenwand (11) der ersten Verbundplatte (1) erstrecken, eine zweite Verbundplatte (2) nach einem der Ansprüche 1 bis 7 oder eine durch das Verfahren nach einem der Ansprüche 8 bis 14 gewonnene Verbundplatte, versehen mit zweiten Verbindungsmitteln (20), die sich wenigstens teilweise entlang einer zweiten aufrechten Seite (21) der zweiten Verbundplatte erstrecken, um die erste und die zweite Verbundplatte (1, 2) zu verbinden, umfasst, wobei wenigstens eines der ersten Verbindungsmittel (10) in einem Teil mit der ersten Verbundplatte (1) hergestellt ist und wenigstens ein Teil der zweiten Verbindungsmittel (20) in einem Teil mit der zweiten Verbundplatte (2) hergestellt ist.

16. Satz nach dem vorhergehenden Anspruch, **dadurch gekennzeichnet, dass** der Satz ebenfalls dritte Verbindungsmittel (3) umfasst, wobei die ersten und die zweiten Verbindungsmittel (10, 20) einerseits und die dritten Verbindungsmittel (3) andererseits komplementäre zusammenwirkende Teile umfassen, wobei die dritten Verbindungsmittel (3) die ersten und die zweiten Verbindungsmittel (10, 20) in der Verbindungsrichtung und der Höhenrichtung (Z) der Platten (1, 2) in Eingriff nehmen, um die ersten und die zweiten Verbindungsmittel (10, 20) in einer Richtung, die zueinander zeigt, zu halten.

## Revendications

1. Panneau sandwich (1) comprenant un coeur (15, 25) avec une première et deuxième surface opposée (150, 155), dans lequel la première surface (150) est pourvue d'au moins une première feuille (16) en une matière de renforcement fibreuse, la deuxième surface (155) étant pourvue d'au moins une deuxième feuille (17) en une matière de renforcement fibreuse, dans lequel
- au moins une première partie (101) de la première feuille (16) qui fait saillie par rapport à un premier bord (151) de la première surface (150),
- au moins une deuxième partie (102) de la deuxième feuille (17) qui fait saillie par rapport à un deuxième bord (152) de la deuxième surface (155) opposé au premier bord (151),
- sont positionnées de manière adjacente pour définir une section de chevauchement (153) dans laquelle la première et la deuxième feuille se chevauchent au moins en partie,
- dans lequel la première partie (101) de la première feuille et la deuxième partie (102) de la deuxième feuille sont reliées dans au moins une partie de la section de chevauchement (153) au moyen de fibres de liaison de matière de renforcement fibreuse, **caractérisé en ce que** la section de chevauchement (153) est repliée le long d'un côté debout (154) du coeur (15) vers la première surface (16) du coeur.

2. Panneau sandwich selon la revendication 1, **caractérisé en ce que** la première partie (101) de la première feuille et la deuxième partie (102) de la deuxième feuille sont reliées, dans au moins une partie de la section de chevauchement (153), au moyen de fibres de liaison continues de matière de renforcement fibreuse.

3. Panneau sandwich selon l'une des revendications 1 ou 2, **caractérisé en ce que** les fibres de liaison (100) dans la section de chevauchement (153) s'étendent dans une ou plusieurs directions sélectionnées par rapport à une direction de hauteur du panneau sandwich (1, 2) ou à un ou plusieurs angles par rapport à une direction de hauteur du panneau sandwich ou une combinaison de deux ou de plus de deux de ces directions.

4. Panneau sandwich selon la revendication précédente, **caractérisé en ce que** les fibres de liaison (100) sont prévues dans une pluralité de rangées de fibres de liaison reliées et **en ce que** la section de chevauchement (153) s'étend dans la direction des rangées de fibres de liaison (100) reliées.

5. Panneau sandwich selon l'une quelconque des revendications précédentes, **caractérisé en ce que** les fibres de liaison (100) sont piquées, cousues, tuftées ou tricotées ou une combinaison de deux ou de plus de deux de ces techniques.

6. Panneau sandwich selon l'une quelconque des revendications précédentes, **caractérisé en ce que** le panneau sandwich et la section de chevauchement (153) sont imprégnés avec une résine thermodurcissable non polymérisée ou une matière thermoplastique.

7. Panneau sandwich selon l'une quelconque des revendications précédentes, **caractérisé en ce que** la section de chevauchement (153) s'étend dans la direction longitudinale du panneau sandwich.

8. Procédé pour produire un panneau sandwich (1) dans lequel un coeur (15) est prévu dans une direction de mouvement, dans lequel au moins une première et deuxième feuille (16, 17) respectives en une matière de renforcement fibreuse sont prévues sur des première et deuxième surfaces (150, 155) opposées du coeur, dans lequel
- une première partie (101) de la première feuille (16) qui fait saillie par rapport à un premier bord (151) de la première surface (150) du coeur et
- une deuxième partie (102) de la deuxième feuille (17) qui fait saillie par rapport à un deuxième bord (152) de la deuxième surface (155) du coeur opposé au premier bord (151),
- sont positionnées de manière adjacente de telle façon qu'elles se chevauchent au moins en partie et une section de chevauchement (153) est déterminée au niveau du coeur,
- les première et deuxième parties (101, 102) sont reliées au moyen de fibres de liaison en une matière de renforcement fibreuse, dans au moins une partie de la section de chevauchement,
**caractérisé en ce que** la section de chevauchement (153) est repliée le long d'un côté debout (154) du coeur (15) vers la première surface (16) du coeur pour fournir une structure sandwich et **en ce que** la structure sandwich est imprégnée avec une résine thermoplastique ou thermodurcissable.

9. Procédé selon la revendication précédente, **caractérisé en ce que** la première feuille (16), le coeur (15) et la deuxième feuille (17) sont reliés le long d'au moins une partie de la surface du coeur au moyen de fibres de liaison en une matière de renforcement fibreuse s'étendant dans la direction de la hauteur de la structure sandwich.

10. Procédé selon la revendication précédente, **caractérisé en ce que** le panneau sandwich, après l'application des fibres de liaison (14, 100), est imprégnée avec une résine, de préférence par pultrusion.

11. Procédé selon l'une quelconque des revendications précédentes, **caractérisé en ce que** la résine est sélectionnée entre une résine thermodurcissable polymérisable qui est polymérisée ou une matière thermoplastique.

12. Procédé selon l'une quelconque des revendications précédentes, dans lequel il est fait usage comme fibres de liaison (100) de fibres continues, et où les fibres de liaison (100) dans la section de chevauchement (153) s'étendent dans une ou plusieurs directions sélectionnées à partir d'une direction de hauteur du panneau sandwich (1, 2) ou à un ou plusieurs angles par rapport à une direction de hauteur du panneau sandwich ou une combinaison de deux ou de plus de deux de ces directions.s

13. Procédé selon l'une quelconque des revendications précédente, dans lequel les fibres de liaison (100) sont appliquées dans la direction de hauteur de la structure sandwich de telle manière qu'une pluralité de rangées de colonnes reliées de fibres de liaison sont formées en déplaçant la structure sandwich par rapport à un appareil d'application de fibres de liaison où des colonnes successives de fibres de liaison sont reliées les unes aux autres dans au moins une direction, de préférence dans une direction dans laquelle la structure sandwich est déplacée par rapport à l'appareil d'application de fibres de liaison.

14. Procédé selon l'une quelconque des revendications précédentes, dans lequel lors de l'application des fibres de liaison, une pluralité d'aiguille sont mues à travers la structure sandwich et la section de chevauchement (153), entre une position rétractée dans laquelle les aiguilles ne pénètrent pas dans la structure et une position de pénétration et dans lequel la structure sandwich et l'appareil d'application de fibres de liaison sont déplacés l'un par rapport à l'autre dans la position rétractée des aiguilles.

15. Ensemble comprenant un premier panneau sandwich (1) selon l'une quelconque des revendications 1 à 7 ou un panneau sandwich obtenu par le procédé de l'une quelconque des revendications 8 à 14, pourvu de premiers moyens de liaison (10) qui s'étendent au moins en partie le long d'une première paroi latérale debout (11) du premier panneau sandwich (1), un deuxième panneau sandwich (2) selon l'une quelconque des revendications 1 à 7 ou un panneau sandwich obtenu par le procédé de l'une quelconque des revendications 8 à 14, pourvu de deuxièmes moyens de liaison (20) qui s'étendent au moins en partie le long d'une deuxième côté debout (21) du deuxième panneau sandwich pour relier les premier et deuxième panneaux sandwichs (1, 2), dans lequel au moins un des premier moyens de liaison (10) est réalisé d'un seul tenant avec le premier panneau sandwich (1) et au moins une partie des deuxièmes moyens de liaison (20) est réalisée d'un seul tenant avec le deuxième panneau sandwich (2).

16. Ensemble selon la revendication précédente, **caractérisé en ce que** l'ensemble comprend des troisièmes moyens de liaison (3), dans lequel les premiers et deuxièmes moyens de liaison (10, 20) d'une part et les troisièmes moyens de liaison (3) d'autre part comprennent des parties complémentaires coopérantes, dans lequel les troisièmes moyens de liaison (3) entrent en prise avec les premiers et deuxièmes moyens de liaison (10, 20) dans la direction de liaison et la direction de hauteur (Z) des panneaux (1, 2) afin de maintenir les premiers et deuxièmes moyens de liaison (10, 20) dans des directions qui se font face.
